# FASCICULE DE BREVET EUROPEEN

(11) **EP 3 978 310 B1**
(45) Date de publication et mention de la délivrance du brevet: **15.03.2023**
(21) Numéro de dépôt: 21200918.7
(22) Date de dépôt: 05.10.2021
(51) Int. Cl.: B60N 3/02, B60N 2/24, B61D 33/00, B61D 37/00

(54) **ENSEMBLE DE MAINTIEN D'UN PASSAGER DANS UN VÉHICULE DE TRANSPORT**
ANORDNUNG ZUM FESTHALTEN FÜR PASSAGIER IN EINEM TRANSPORTFAHRZEUG
ASSEMBLY FOR HOLDING A PASSENGER IN A TRANSPORT VEHICLE

(30) Priorité: 05.10.2020 FR 2010139
(43) Date de publication de la demande: 06.04.2022
(73) Titulaire: ALSTOM Transport Technologies, 93400 Saint-Ouen (FR)
(72) Inventeur: BLAS, Antoine, 92320 Chatillon (FR); VERGNAUD, Loïc, 75018 Paris (FR); DE-COLOMBEL, Bertrand, 75020 Paris (FR); MORTELETTE, Julien, 59770 Marly (FR); GRILLET, Augustin, 59163 Conde sur l'Escaut (FR)
(74) Mandataire: Lavoix

(56) Documents cités:
- EP-A1- 2 914 457
- JP-U- S5 825 742
- US-A- 2 091 378
- US-A1- 2014 083 016

## Description

La présente invention concerne un ensemble de maintien d'un passager dans un véhicule de transport, ledit ensemble comprenant un support et un dispositif de préhension ; le dispositif de préhension s'étendant selon une première direction et comprenant un élément de préhension et un premier élément d'assemblage, solidaires l'un de l'autre et adjacents selon ladite première direction ; le support comprenant un second élément d'assemblage ; l'élément de préhension étant configuré pour être saisi par un passager, le premier élément d'assemblage étant apte à s'assembler de manière amovible au second élément d'assemblage du support.

L'invention s'applique particulièrement aux véhicules terrestres de transport public, de type train, tram ou autobus.

En période d'épidémie bactérienne ou virale, un aménagement adapté des transports en commun permet de limiter les facteurs de contagion. A cet effet, il est souhaitable d'éviter un contact physique direct entre l'usager et un élément situé à l'intérieur des véhicules de transport, tel qu'une barre de maintien. Par ailleurs, il est avantageux d'inciter les usagers à se placer à une certaine distance les uns des autres dans le véhicule.

Le document WO2018150398 décrit une poignée transportable par un usager de transports en commun. Ladite poignée comporte une tige télescopique terminée par une ventouse, permettant à l'usager de fixer ladite poignée de manière temporaire à une paroi intérieure du véhicule de transport. L'usager peut ainsi se tenir à la poignée pour éviter de tomber durant le déplacement du véhicule, tout en évitant un contact direct entre l'un de ses membres et une surface dudit véhicule.

Cependant, la poignée décrite dans le document WO2018150398 comporte un mécanisme relativement complexe et coûteux. Or, pour être efficace contre la contagion, il est préférable que tous les passagers soient en possession d'un dispositif leur permettant d'éviter un contact direct avec une surface du véhicule de transport.

Par ailleurs, le mécanisme décrit dans le document WO2018150398 ne permet pas une accroche totalement sécurisée, notamment dans le cas de fortes secousses.

Enfin, la poignée décrite dans le document WO2018150398 ne permet pas d'inciter les passagers à respecter une certaine distance entre eux à l'intérieur du véhicule.

Le document US2091378 divulgue un mécanisme ergonomique de montage de poignée qui ne prévoit pas le transport de cette poignée par l'usager.

La présente invention a pour but résoudre ces problèmes. A cet effet, l'invention a pour objet un ensemble de maintien du type précité, dans lequel l'un des premier et second éléments d'assemblage comporte un orifice défini par un bord ; et l'autre des premier et second éléments d'assemblage comporte un organe saillant, apte à s'assembler de manière réversible avec ledit orifice et à venir en butée contre ledit bord.

Suivant d'autres aspects avantageux de l'invention, l'ensemble de maintien comporte l'une ou plusieurs des caractéristiques suivantes, prises isolément ou suivant toutes les combinaisons techniquement possibles :
- le premier élément d'assemblage comporte l'orifice ; et le second élément d'assemblage comporte l'organe saillant ;
- le premier élément d'assemblage comporte l'organe saillant ; et le second élément d'assemblage comporte l'orifice ;
- l'organe saillant comporte une tête et une tige, adjacentes et reliées par un épaulement, ledit épaulement étant apte à venir en butée contre le bord de l'orifice ;
- l'orifice comporte une première et une seconde portions adjacentes selon une deuxième direction ; une dimension maximale de ladite première et de ladite seconde portions, perpendiculairement à la deuxième direction, étant respectivement supérieure et inférieure à une dimension maximale de la tête ;
- le bord de l'orifice s'étend entre une première extrémité ouverte et une seconde extrémité fermée ; et l'organe saillant comporte un patin apte à coulisser dans l'orifice à partir de la première extrémité ouverte et à venir en butée contre la seconde extrémité fermée ;
- le support comporte un panneau dans lequel est ménagé l'orifice du second élément d'assemblage, plusieurs orifices sensiblement identiques étant préférentiellement ménagés dans ledit panneau ;
- le support comporte un manchon apte à être fixé sur une barre de maintien disposée à l'intérieur du véhicule de transport ;
- l'élément de préhension présente une surface de maintien configurée pour servir d'appui à un coude ou un avant-bras du passager.

L'invention se rapporte en outre à un véhicule de transport comprenant au moins un ensemble de maintien tel que décrit ci-dessus, le support de l'ensemble de maintien étant fixé à l'intérieur dudit véhicule.

L'invention sera mieux comprise à la lecture de la description qui va suivre, donnée uniquement à titre d'exemple non limitatif et faite en se référant aux dessins sur lesquels :
[Fig 1] la figure 1 est une vue latérale d'un ensemble de maintien selon un premier mode de réalisation de l'invention ;
[Fig 2] la figure 2 est une vue d'un élément de l'ensemble de la figure 1 ;
[Fig 3] la figure 3 est une vue de détail, en coupe partielle, d'un véhicule de transport comprenant un ensemble de maintien selon un deuxième mode de réalisation de l'invention ;
[Fig 4] la figure 4 est une vue de détail, en coupe partielle, d'un véhicule de transport comprenant un ensemble de maintien selon un troisième mode de réalisation de l'invention ; et
[Fig 5] la figure 5 est une vue de détail d'un véhicule de transport comprenant un ensemble de maintien selon un quatrième mode de réalisation de l'invention.

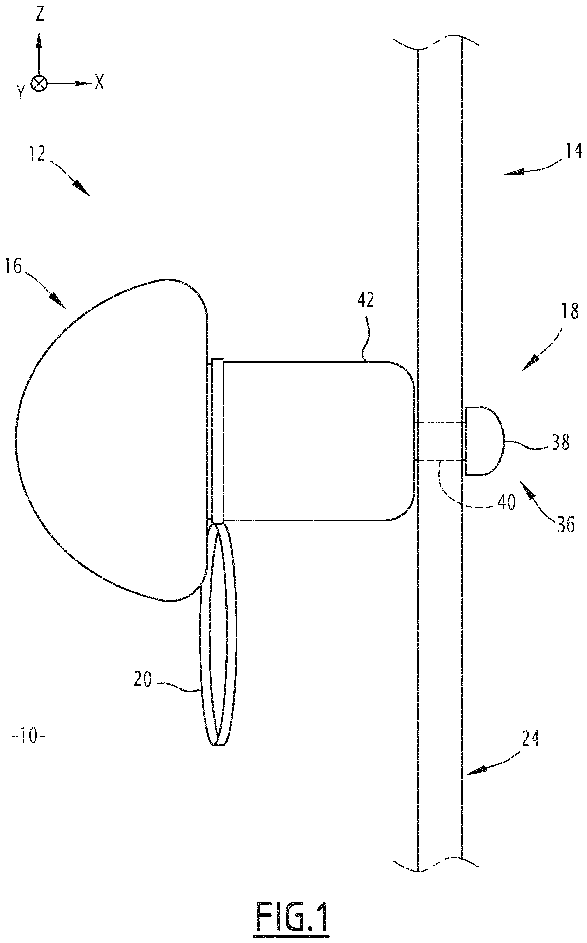

Chacune des figures 1, 3 et 4 représente un ensemble 10, 110, 210 de maintien d'un passager dans un véhicule 300 de transport, respectivement selon un premier, un deuxième et un troisième modes de réalisation de l'invention.

En particulier, chacun des ensembles 10, 110, 210 de maintien est destiné à être installé à l'intérieur d'un véhicule 300 de transport, notamment un véhicule terrestre de type train, tram ou autobus.

Chacun des ensembles 10, 110, 210 de maintien est préférentiellement destiné à être installé dans un véhicule 300 existant, par exemple en étant fixé à une barre de maintien 302, 304 équipant ledit véhicule, comme détaillé ci-après, ou à une paroi.

Les ensembles 10, 110, 210de maintien seront décrits simultanément ci-après, les éléments communs étant désignés par les mêmes numéros de référence.

L'ensemble 10, 110, 210 de maintien comprend un dispositif de préhension 12, 112, 212 et un support 14, 114, 214, aptes à s'assembler l'un à l'autre de manière amovible. Plus précisément, le support 14, 114, 214 est installé de manière fixe à l'intérieur du véhicule 300 de transport ; et le dispositif de préhension 12, 112, 212 est transporté par le passager, qui peut l'assembler temporairement au support 14, 114, 214, comme décrit ci-après.

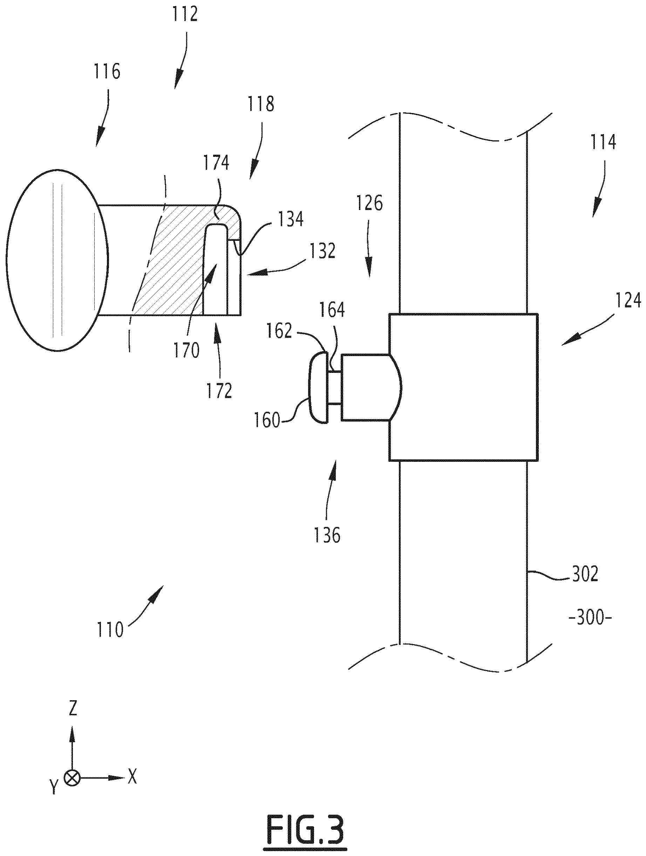

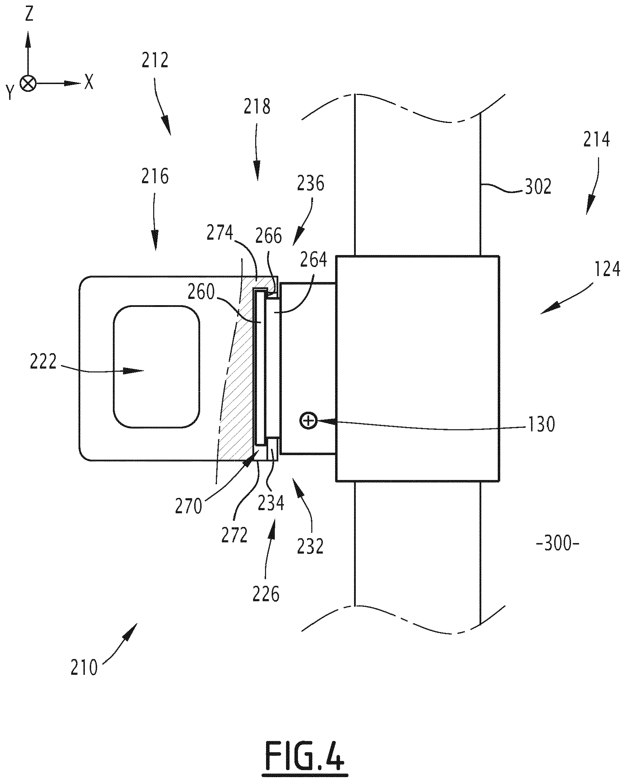

L'ensemble 10 de la figure 1 et l'ensemble 210 de la figure 4 sont représentés dans une configuration assemblée. L'ensemble 110 de la figure 3 est représenté dans une configuration dissociée, le dispositif 112 de préhension et le support 114 n'étant pas assemblés l'un à l'autre.

Le dispositif de préhension 12, 112, 212 s'étend selon une direction principale. On considère une base orthonormée X, Y, Z, la direction Z représentant la verticale. Dans les configurations représentées sur les figures 1, 3 et 4, la direction principale est la direction horizontale X.

Le dispositif de préhension 12, 112, 212 comprend un élément de préhension 16, 116, 216 et un premier élément d'assemblage 18, 118, 218, solidaires l'un de l'autre et adjacents selon la direction X.

De manière optionnelle, comme visible sur la figure 1, le dispositif de préhension 12 comporte en outre une dragonne 20 souple, fixée à l'élément de préhension 16. Ladite dragonne 20 peut être passée au poignet du passager pour le transport dudit dispositif de préhension 12.

L'élément de préhension 16, 116, 216 est configuré pour être saisi par le passager durant le transport dans le véhicule 300. A cet effet, plusieurs formes sont possibles.

Par exemple, les éléments de préhension 16 et 116 des ensembles 10 et 110 sont de type bouton et présentent une forme de révolution par rapport à la direction X, ladite forme étant de préférence bombée et/ou arrondie.

L'élément de préhension 216 de l'ensemble 210 est de type poignée et présente une forme sensiblement annulaire disposée dans un plan parallèle à X. Ledit anneau délimite un espace central 222 pour recevoir les doigts du passager.

D'autres formes d'éléments de préhension, par exemple de type barreau, sont également possibles. Par exemple, selon une variante, l'élément de préhension 16, 116, 216 présente une surface de maintien configurée pour servir d'appui à un coude ou un avant-bras du passager.

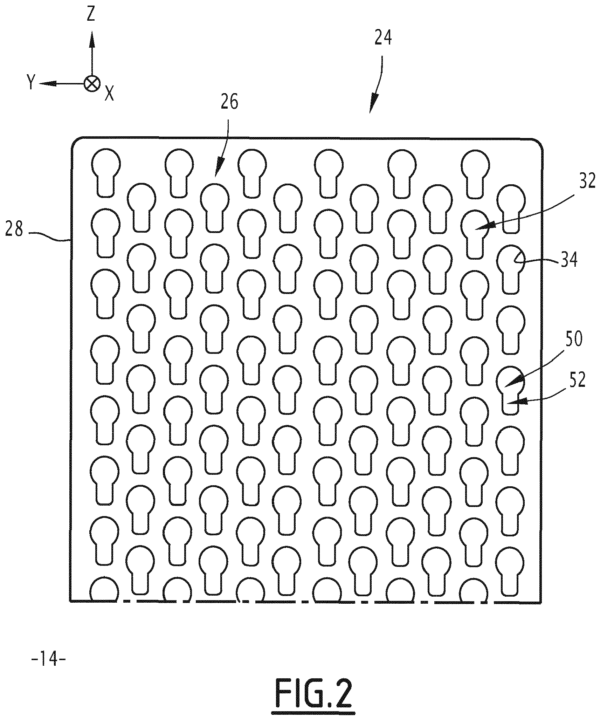

Le support 14, 114, 214 comprend une base 24, 124 et un second élément d'assemblage 26, 126, 226. Le support 14 de l'ensemble 10 est représenté seul sur la figure 2.

La base 24, 124 est destinée à être installée de manière fixe ou temporaire, par exemple dans le cas de vagues de contagion, à l'intérieur du véhicule 300. A cet effet, plusieurs formes sont possibles.

Par exemple, la base 24 de l'ensemble 10 est un panneau présentant un contour 28 sensiblement rectangulaire. Ledit contour est par exemple muni de moyens (non représentés) de fixation à une paroi intérieure du véhicule 300, ou à une barre de maintien 302, 304 disposée à l'intérieur du véhicule 300.

Dans l'exemple des figures 1 et 2, la base 24 est un panneau sensiblement plan. En variante non représentée, la base 24 présente une forme incurvée, telle qu'une forme cylindrique, apte à être disposée autour d'une barre de maintien 302, 304.

La base 124 des ensembles 110 et 210 est un manchon apte à être fixé sur une barre de maintien 302, 304 du véhicule 300. Par exemple, le manchon 124 est formé de deux parties sensiblement symétriques et assemblables l'une à l'autre par une ou plusieurs vis 130, visibles sur la figure 4, de part et d'autre de la barre de maintien 302, 304.

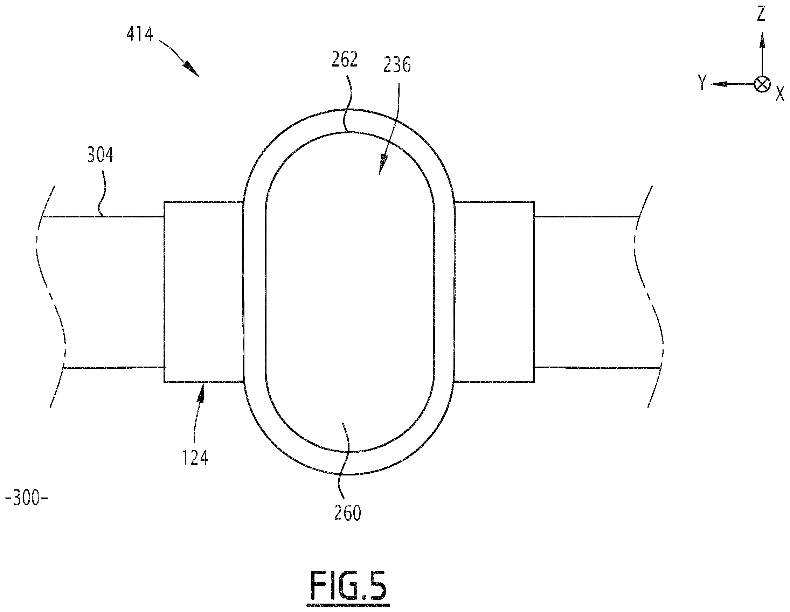

Dans les deuxième et troisième modes de réalisation des figures 3 et 4, la barre de maintien 302 est disposée selon la verticale Z. La figure 5 montre une variante 414 au support 214 de la figure 4. Le support 414 comporte un manchon 124 assemblé à une barre de maintien 304. Ladite barre 304 est disposée horizontalement selon Y. La barre 304 est par exemple située en hauteur dans le véhicule 300.

Le premier élément d'assemblage 18, 118, 218 du dispositif de préhension 12, 112, 212 et le second élément d'assemblage 26, 126, 226 du support 14, 114, 214 sont aptes à s'assembler l'un à l'autre de manière réversible, afin de permettre au passager de se maintenir immobile par rapport au véhicule 300 durant le transport.

A cet effet, l'un des premier 118, 218 et second 26 éléments d'assemblage comporte un orifice 32, 132, 232 défini par un bord 34, 134, 234 ; et l'autre des premier 18 et second 126, 226 éléments d'assemblage comporte un organe saillant 36, 136, 236, apte à s'assembler de manière réversible avec ledit orifice 32, 132, 232 et à venir en butée contre ledit bord.

Dans le premier mode de réalisation des figures 1 et 2, le premier élément d'assemblage 18 comporte l'organe saillant 36 et le second élément d'assemblage 26 comporte l'orifice 32. Dans les deuxième et troisième modes de réalisation des figures 3 et 4, le premier élément d'assemblage 118, 218 comporte l'orifice 132, 232 et le second élément d'assemblage 126, 226 comporte l'organe saillant 136, 236.

Dans le premier mode de réalisation de la figure 1, l'organe saillant 36 comporte une tête 38, une tige 40 et un corps 42, adjacents l'un à l'autre selon X.

La tête 38 a une forme bombée, par exemple hémisphérique. La tige 40 a une forme cylindrique s'étendant selon X.

La tige 40 correspond à une réduction de diamètre perpendiculairement à X, par rapport à la tête 38 d'une part et au corps 42 d'autre part.

Le corps 42 de l'organe saillant 36 est adjacent à l'élément de préhension 16 du dispositif 12 et solidaire dudit élément de préhension.

Dans le premier mode de réalisation, le second élément d'assemblage 26 du support 14 de l'ensemble 10 comporte une pluralité d'orifices 32 traversants, sensiblement identiques et répartis sur une surface du panneau 24. Dans le mode de réalisation représenté, ladite surface du panneau 24 est disposée selon un plan (Y, Z).

Le bord 34 de chaque orifice 32 traversant forme un contour fermé. Chaque orifice 32 traversant a une forme sensiblement en trou de serrure et comporte une portion élargie 50 et une portion étroite 52, alignées et continues selon Z.

La portion élargie 50 présente une forme sensiblement circulaire, de diamètre supérieur ou sensiblement égal au diamètre de la tête 38. La portion étroite 52 a une forme oblongue s'étendant selon Z. Une dimension selon Y de ladite portion étroite est inférieure au diamètre de la tête 38 et supérieure ou égale au diamètre de la tige 40.

Dans l'exemple de la figure 2, les orifices 32 sont répartis sur une totalité de la surface du panneau 24. En variante non représentée, les orifices 32 sont regroupés sur des zones écartées les unes des autres. Par exemple, les orifices 32 sont disposés selon plusieurs bandes verticales, afin d'inciter les passagers à se répartir entre lesdites bandes pour respecter une distanciation physique.

Le deuxième mode de réalisation de la figure 3, ainsi que le troisième mode de réalisation de la figure 4 et sa variante de la figure 5, vont maintenant être décrits.

Le second élément d'assemblage 126, 226 du support 114, 214 de l'ensemble 110, 210 comporte un organe saillant 136, 236 de type patin. Le support 414 représenté sur la figure 5 comporte également le patin 236.

Le patin 136, 236 comporte une semelle 160, 260 sensiblement plane. Dans les modes de réalisation représentés, la semelle 160, 260 s'étend dans un plan (Y, Z). Le patin 136, 236 comporte en outre un bloc de liaison 164, 264 reliant solidairement la semelle 160, 260 et le manchon 124 du support 114, 214, 414.

La semelle 160, 260 s'étend selon Z entre une extrémité supérieure 162, 262 et une extrémité inférieure. Le bloc de liaison 164, 264 présente des dimensions inférieures à celles de la semelle 160, 260 dans le plan (Y, Z), de sorte à former un épaulement 266 en périphérie de ladite semelle.

Dans le deuxième mode de réalisation de la figure 3, la semelle 160 présente un contour circulaire dans un plan (Y, Z). Le bloc de liaison 164 présente une forme cylindrique de base circulaire.

Dans le mode de réalisation des figures 4 et 5, la semelle 260 est de forme oblongue et présente une plus grande dimension selon Z. Le bloc de liaison 264 présente également une forme oblongue.

Dans le support 214 de la figure 4, le manchon 124 et le patin 236 s'étendent tous deux selon des axes parallèles à Z. En revanche, dans le support 414 de la figure 5, le manchon 124 et le patin 236 s'étendent selon des axes perpendiculaires l'un à l'autre.

Le premier élément d'assemblage 118, 218 du dispositif de préhension 112, 212 de l'ensemble 110, 210 comporte un orifice 132, 232 défini par un bord 134, 234 ouvert, sensiblement en U. Dans le mode de réalisation représenté, l'orifice 132, 232 est symétrique par rapport à un plan (X, Z). L'orifice 132, 232 présente une forme sensiblement complémentaire au bloc de liaison 164, 264.

L'orifice 232 donne accès à une glissière 170, 270 ménagée sous la forme d'une cavité dans le premier élément d'assemblage 118, 218. La glissière 170, 270 a une forme sensiblement complémentaire à la semelle 160, 260. La glissière 170, 270 présente selon Z une extrémité inférieure 172, 272 ouverte, adjacente à l'ouverture du bord 134, 234, et une extrémité supérieure 174, 274 fermée.

De préférence, le patin 136, 236 et/ou le premier élément d'assemblage 118, 218 de l'ensemble 110, 210 est/sont formé(s) ou fini(s) en surface d'un matériau légèrement déformable élastiquement, de type élastomère, afin de limiter les nuisances sonores, d'absorber les tolérances de fabrication et d'offrir un léger amorti dans les virages.

Afin de mettre en place l'utilisation d'un ensemble de maintien 10, 110 ou 210 dans les véhicules 300 de transport public, une pluralité de supports 14, 114, 214 et/ou 414 sont fixés à des emplacements choisis à l'intérieur desdits véhicules.

De préférence, les supports 14, 114, 214, 414 équipant un même véhicule sont installés à des hauteurs différentes, prenant en compte les différences de taille des passagers.

De préférence, les supports 14, 114, 214, 414 équipant un même véhicule sont installés à une distance suffisante les uns des autres, afin d'inciter les passagers à ne pas stationner trop proches les uns des autres.

De manière optionnelle, certains des supports 14, 114, 214, 414 installés dans un véhicule 300 sont également assemblés à des cloisons légères (non représentées) délimitant des emplacements distincts pour les passagers.

Par ailleurs, une pluralité de dispositifs de préhension 12, 112, 212 est distribuée aux passagers susceptibles d'emprunter les véhicules 300 équipés de supports 14, 114, 214, 414 correspondants.

Des procédés d'utilisation des ensembles 10, 110, 210 vont maintenant être décrits.

Selon le premier mode de réalisation, pour assembler temporairement le dispositif de préhension 12 au support 14 de l'ensemble de maintien 10, le premier élément d'assemblage 18 du dispositif de préhension 12 est approché du second élément d'assemblage 26 du support 14, de sorte à placer la tête 38 de l'organe saillant 36 en vis-à-vis de l'un des orifices 32 du support 14. En particulier, le passager choisit un orifice 32 en fonction de sa hauteur selon Z.

La tête 38, puis la tige 40, sont introduites selon X dans la portion élargie 50 de l'orifice 32, jusqu'à ce que le corps 42 vienne en butée contre le panneau 24. Puis le dispositif de préhension 12 est déplacé vers le bas, la tige 40 se déplaçant alors vers la portion étroite 52 de l'orifice 32.

L'ensemble 10 est ainsi dans la configuration assemblée représentée à la figure 1. Les butées formées par la tête 38 et par le corps 42 bloquent tout déplacement selon X du dispositif de préhension 12 par rapport au support 14. De même, la tige 40 est bloquée selon Y dans la portion étroite 52 de l'orifice 32. Enfin, le dispositif de préhension 12 est maintenu en place selon Z par le poids appliqué par le passager sur l'élément de préhension 16.

Le passager est ainsi en mesure de se maintenir immobile dans le véhicule 300 sans contact direct avec l'intérieur dudit véhicule, pour éviter une contamination bactérienne ou virale.

En revanche, le dispositif de préhension 12 est libre en rotation autour d'un axe parallèle à X, matérialisé par la tige 40. Une telle rotation permet au passager de compenser plus facilement les mouvements du véhicule 300 durant le transport.

Afin de dissocier le dispositif de préhension 12 du support 14 à la fin de son trajet, le passager déplace à nouveau la tige 40 jusqu'à la portion élargie 50 de l'orifice 32 et dégage la tête 38 dudit orifice.

Selon le deuxième ou le troisième mode de réalisation, pour assembler temporairement le dispositif de préhension 112, 212 au support 114, 214 de l'ensemble de maintien 110, 210, le premier élément d'assemblage 118, 218 du dispositif de préhension 112, 212 est disposé au-dessus du second élément d'assemblage 126, 226 du support 114, 214. Plus précisément, l'ouverture du bord 134, 234 de l'orifice 132, 232 et l'extrémité inférieure ouverte 172, 272 de la glissière 170, 270 sont placées respectivement en vis-à-vis des extrémités supérieures du bloc de liaison 164, 264 et de la semelle 160, 260.

Le dispositif de préhension 112, 212 est ensuite déplacé vers le bas, de sorte à faire coulisser le patin 136, 236 dans l'orifice 132, 232 et dans la glissière 170, 270, jusqu'à ce que l'extrémité supérieure 162, 262 de la semelle 160, 260 vienne en butée selon Z dans l'extrémité supérieure 174, 274 fermée de ladite glissière. En parallèle ou en variante, l'extrémité supérieure du bloc de liaison 164, 264 vient en butée contre l'extrémité supérieure du bord 134, 234 en U.

L'ensemble 110, 210 est ainsi dans la configuration assemblée notamment visible sur la figure 4. La semelle 160, 260 est bloquée selon X et selon Y dans la glissière 170, 270. Par ailleurs, le dispositif de préhension 112, 212 est maintenu en place selon Z par rapport au support 114, 214, par le poids appliqué par le passager sur l'élément de préhension 116, 216.

Dans le deuxième mode de réalisation, la forme circulaire de la semelle 160 permet au dispositif de préhension 112 de pivoter dans un plan (Y, Z) autour du patin 136, de sorte à permettre au passager de compenser les mouvements du véhicule 300 durant le transport.

Au contraire, le dispositif de préhension 212 est bloqué en rotation par rapport au support 214 dans la configuration assemblée.

Afin de dissocier le dispositif de préhension 112, 212 du support 114, 214 à la fin de son trajet, le passager fait coulisser vers le haut ledit dispositif de préhension 112, 212 pour dégager la semelle 160, 260 de la glissière 170, 270.

Un procédé similaire est mis en oeuvre en remplaçant le support 214 de la figure 4, fixé à une barre 302 verticale, par le support 414 de la figure 5 fixé à une barre 304 horizontale.

D'autres géométries d'éléments de préhension 16, 116, 216 des dispositifs de préhension 12, 112, 212 sont possibles, par exemple pour privilégier un maintien par la main ou d'autres parties du corps des passagers, comme l'avant-bras ou le coude.

Pour un coût restreint, l'invention décrite ici permet de mettre en place une protection sanitaire des passagers d'un véhicule de transport public, en évitant auxdits passagers de toucher directement des surfaces intérieures du véhicule. En disposant judicieusement, à l'intérieur du véhicule, les supports des ensembles décrits, l'invention permet également d'inciter les passagers à respecter une distanciation physique dans le véhicule.

La présente invention permet donc d'éviter une propagation épidémique dans les transports publics, au moyen d'un dispositif facile à produire à faible coût.

## Revendications

1. Ensemble (10, 110, 210) de maintien d'un passager dans un véhicule (300) de transport, ledit ensemble comprenant un support (14, 114, 214, 414) et un dispositif de préhension (12, 112, 212) ; le support étant apte à être installé de manière fixe à l'intérieur du véhicule ; le dispositif de préhension étant apte à être transporté par un passager ;
le dispositif de préhension s'étendant selon une première direction (X) et comprenant un élément de préhension (16, 116, 216) et un premier élément d'assemblage (18, 118, 218), solidaires l'un de l'autre et adjacents selon ladite première direction ; le support comprenant un second élément d'assemblage (26, 126, 226) ;
l'élément de préhension étant configuré pour être saisi par un passager, le premier élément d'assemblage étant apte à s'assembler de manière amovible au second élément d'assemblage du support ;
l'ensemble étant **caractérisé en ce que** l'un (26, 118, 218) des premier et second éléments d'assemblage comporte un orifice (32, 132, 232) défini par un bord (34, 134, 234) ; et l'autre (18, 126, 226) des premier et second éléments d'assemblage comporte un organe saillant (36, 136, 236), apte à s'assembler de manière réversible avec ledit orifice et à venir en butée contre ledit bord.

2. Ensemble (110, 210) de maintien selon la revendication 1, dans lequel le premier élément d'assemblage (118, 218) comporte l'orifice ; et le second élément d'assemblage (126, 226) comporte l'organe saillant.

3. Ensemble (10) de maintien selon la revendication 1, dans lequel le premier élément d'assemblage (18) comporte l'organe saillant ; et le second élément d'assemblage (26) comporte l'orifice.

4. Ensemble (10) de maintien selon l'une des revendications précédentes, dans lequel l'organe saillant (36) comporte une tête (38) et une tige (40), adjacentes et reliées par un épaulement, ledit épaulement étant apte à venir en butée contre le bord de l'orifice.

5. Ensemble de maintien selon la revendication 4, dans lequel l'orifice (32) comporte une première (50) et une seconde (52) portions adjacentes selon une deuxième direction (Z) ; une dimension maximale de ladite première et de ladite seconde portions, perpendiculairement à la deuxième direction, étant respectivement supérieure et inférieure à une dimension maximale de la tête (38).

6. Ensemble de maintien (110, 210) selon l'une des revendications 1 à 4, dans lequel le bord (134, 234) de l'orifice s'étend entre une première extrémité ouverte et une seconde extrémité fermée ; et l'organe saillant comporte un patin (136, 236) apte à coulisser dans l'orifice à partir de la première extrémité ouverte et à venir en butée contre la seconde extrémité fermée.

7. Ensemble de maintien selon l'une des revendications précédentes, dans lequel le support (14) comporte un panneau (24) dans lequel est ménagé l'orifice (32) du second élément d'assemblage, plusieurs orifices (32) sensiblement identiques étant préférentiellement ménagés dans ledit panneau.

8. Ensemble de maintien selon l'une des revendications précédentes, dans lequel le support (114, 214) comporte un manchon (124) apte à être fixé sur une barre de maintien (302, 304) disposée à l'intérieur du véhicule de transport.

9. Ensemble de maintien (10, 110, 210) selon l'une des revendications précédentes, dans lequel l'élément de préhension (16, 116, 216) présente une surface de maintien configurée pour servir d'appui à un coude ou un avant-bras du passager.

10. Véhicule de transport (300) comprenant au moins un ensemble de maintien (10, 110, 210) selon l'une des revendications précédentes, le support (14, 114, 214, 414) de l'ensemble de maintien étant fixé à l'intérieur dudit véhicule.

## Patentansprüche

1. Halteanordnung (10, 110, 210) eines Passagiers in einem Transportfahrzeug (300), die Anordnung umfassend eine Halterung (14, 114, 214, 414) und eine Greifvorrichtung (12, 112, 212); wobei die Halterung geeignet ist, um fest im Inneren des Fahrzeugs installiert zu werden; wobei die Greifvorrichtung geeignet ist, um von einem Passagier transportiert zu werden;
wobei sich die Greifvorrichtung in eine erste Richtung (X) erstreckt und ein Greifelement (16, 116, 216) und ein erstes Montageelement (18, 118, 218) umfasst, die fest miteinander verbunden sind und in die erste Richtung aneinander angrenzen; die Halterung umfassend ein zweites Montageelement (26, 126, 226);
wobei das Greifelement konfiguriert ist, um von einem Passagier ergriffen zu werden, wobei das erste Montageelement geeignet ist, um lösbar mit dem zweiten Montageelement der Halterung montiert zu werden;
wobei die Anordnung **dadurch gekennzeichnet ist, dass** das eine (26, 118, 218) von dem ersten und dem zweiten Montageelement eine Öffnung (32, 132, 232) umfasst, die durch einen Rand (34, 134, 234) definiert ist; und das andere (18, 126, 226) von dem ersten und dem zweiten Montageelement ein hervorstehendes Organ (36, 136, 236) aufweist, das geeignet ist, um reversibel mit der Öffnung montiert zu werden und an dem Rand anzuliegen.

2. Halteanordnung (110, 210) nach Anspruch 1, wobei das erste Montageelement (118, 218) die Öffnung umfasst; und das zweite Montageelement (126, 226) das hervorstehende Organ umfasst.

3. Halteanordnung (10) nach Anspruch 1, wobei das erste Montageelement (18) das hervorstehende Element umfasst; und das zweite Montageelement (26) die Öffnung umfasst.

4. Halteanordnung (10) nach einem der vorherigen Ansprüche, wobei das hervorstehende Organ (36) einen Kopf (38) und einen Schaft (40) umfasst, die aneinander angrenzen und durch eine Schulter verbunden sind, wobei die Schulter geeignet ist, um an dem Rand der Öffnung anzuliegen.

5. Halteanordnung nach Anspruch 4, wobei die Öffnung (32) einen ersten (50) und einen zweiten (52) Abschnitt umfasst, die entlang einer zweiten Richtung (Z) angrenzen; wobei eine maximale Abmessung des ersten und des zweiten Abschnitts senkrecht zu der zweiten Richtung größer bzw. kleiner ist als eine maximale Abmessung des Kopfs (38).

6. Halteanordnung (110, 210) nach einem der Ansprüche 1 bis 4, wobei sich der Rand (134, 234) der Öffnung zwischen einem ersten offenen Ende und einem zweiten geschlossenen Ende erstreckt; und das hervorstehende Organ eine Kufe (136, 236) umfasst, die in der Öffnung von dem ersten offenen Ende aus gleiten und an dem zweiten geschlossenen Ende anliegen kann.

7. Halteanordnung nach einem der vorherigen Ansprüche, wobei die Halterung (14) eine Platte (24) umfasst, in der die Öffnung (32) des zweiten Montageelements ausgebildet ist, wobei vorzugsweise mehrere im Wesentlichen identische Öffnungen (32) in der Platte ausgebildet sind.

8. Halteanordnung nach einem der vorherigen Ansprüche, wobei die Halterung (114, 214) eine Hülse (124) umfasst, die geeignet ist, um an einer Haltestange (302, 304) befestigt zu werden, die im Inneren des Transportfahrzeugs angeordnet ist.

9. Halteanordnung (10, 110, 210) nach einem der vorherigen Ansprüche, wobei das Greifelement (16, 116, 216) eine Haltefläche aufweist, die konfiguriert ist, um als Stütze für einen Ellbogen oder Unterarm des Passagiers zu dienen.

10. Transportfahrzeug (300), umfassend mindestens eine Halteanordnung (10, 110, 210) nach einem der vorherigen Ansprüche, wobei die Halterung (14, 114, 214, 414) der Halteanordnung im Inneren des Fahrzeugs befestigt ist.

## Claims

1. An assembly (10, 110, 210) for holding a passenger in a transport vehicle (300), said assembly comprising a support (14, 114, 214, 414) and a gripping device (12, 112, 212); the support being adapted to be fixedly installed within the vehicle; the gripping device being adapted to be carried by a passenger;
the gripping device extending along a first direction (X) and comprising a gripping member (16, 116, 216) and a first connecting member (18, 118, 218), integral with each other and adjacent along said first direction; the support comprising a second connecting member (26, 126, 226);
the gripping member being configured to be gripped by a passenger, the first connecting member being adapted to be removably connected to the second connecting member of the carrier;
the assembly being **characterised in that** one (26, 118, 218) of the first and second connecting elements comprises an aperture (32, 132, 232) defined by an edge (34, 134, 234); and the other (18, 126, 226) of the first and second connecting elements comprises a protruding member (36, 136, 236) adapted to reversibly connect with said aperture and abut against said edge.

2. The retainer assembly (110, 210) according to claim 1, wherein the first connection element (118, 218) comprises the hole; and the second connection element (126, 226) comprises the protruding member.

3. The retainer assembly (10) according to claim 1, wherein the first connection element (18) comprises the protruding member; and the second connection element (26) comprises the hole.

4. A retainer assembly (10) according to any of the preceding claims, wherein the protruding member (36) comprises a head (38) and a shank (40), adjacent and connected by a shoulder, said shoulder being adapted to abut the edge of the hole.

5. A retainer assembly according to claim 4, wherein the orifice (32) has first (50) and second (52) portions adjacent in a second direction (Z); a maximum dimension of said first and second portions, perpendicular to the second direction, being respectively greater and less than a maximum dimension of the head (38).

6. A retainer assembly (110, 210) according to any of claims 1 to 4, wherein the edge (134, 234) of the hole extends between a first open end and a second closed end; and the protruding member comprises a pad (136, 236) that can be slid into the hole from the first open end and abutting the second closed end.

7. A retainer assembly according to any of the preceding claims, wherein the retainer (14) comprises a panel (24) in which the hole (32) of the second fastener is formed, a plurality of substantially identical holes (32) being preferentially formed in said panel.

8. A holding assembly according to any of the preceding claims, wherein the holder (114, 214) comprises a sleeve (124) adapted to be attached to a holding bar (302, 304) disposed within the transport vehicle.

9. A restraint assembly (10, 110, 210) according to any of the preceding claims, wherein the grip member (16, 116, 216) has a restraining surface configured to support an elbow or forearm of the passenger.

10. A transport vehicle (300) comprising at least one holding assembly (10, 110, 210) according to any one of the preceding claims, the holder (14, 114, 214, 414) of the holding assembly being fixed inside said vehicle.
